# EUROPEAN PATENT SPECIFICATION

(11) **EP 3 366 748 B1**
(45) Date of publication and mention of the grant of the patent: **18.08.2021**
(21) Application number: 17157703.4
(22) Date of filing: 23.02.2017
(51) Int. Cl.: C09K 5/16

(54) **A COMPOSITE MATERIAL FOR THERMOCHEMICAL STORAGE AND A METHOD FOR FORMING A COMPOSITE MATERIAL**
VERBUNDSTOFFMATERIAL ZUR THERMOCHEMISCHEN SPEICHERUNG UND VERFAHREN ZUR FORMUNG EINES VERBUNDSTOFFMATERIALS
MATÉRIAU COMPOSITE POUR STOCKAGE THERMOCHIMIQUE ET PROCÉDÉ PERMETTANT DE FORMER UN MATÉRIAU COMPOSITE

(43) Date of publication of application: 29.08.2018
(73) Proprietor: PBB GbR, 13086 Berlin (DE)
(72) Inventor: Lass-Seyoum, Asnatech, 12345 Berlin (DE); Borozdenko, Dmitry, 13057 Berlin (DE); Friedrich, Thomas, 10367 Berlin (DE)
(74) Representative: Bittner, Thomas L.

(56) References cited:
- WO-A1-2015/197788
- US-A- 3 986 969
- US-A1- 2012 264 600

## Description

The disclosure relates to a composite material for thermochemical storage and a method for forming a composite material.

### Background

Porous storage materials have received significant interest in recent years for adsorption thermochemical heat storage applications. While several studies have been reported on different approaches taken to identify efficient and economical materials, most of them are focused on silica gel, zeolite and the so-called zeotype molecular sieves in combination with water as a working fluid. These material pairs exhibit good storage characteristics including high storage density, relatively low cost, and in the case of zeolites very high hydrothermal stability. However, the major limitation of these materials is their high charging temperatures. This significantly limits the storage of thermal heat at a low temperature level that often occurs typically as waste heat or attained from CHP (CHP - combined heat and power) and solar thermal technologies.

Currently there is no economically appropriate material that can realize a storage density higher or comparable to silica gel and zeolites, with typical value of around 180 kWh/m3 and 220 kWh/m³ respectively, at a charging temperature below 110°C. This is reasonable, as a considerably high storage density requires a strong intermolecular interaction between the molecules of the working fluid and the solid adsorbent that such a low desorption temperature is unable to overcome this intense interaction.

Document US 2012 / 0264600 A1 discloses a composite adsorbent material comprising a porous host material of activated carbon which is impregnated with silica-gel and calcium chloride.

Document WO 2015 / 197788 A1 discloses a composite material for seasonal storage of energy in a domestic heating system, comprising grains of hygroscopic salt arranged within a porous material with the hygroscopic metal concentration in the central zone of the grain being at least 0.7 times that in the peripheral zone.

Document US 3,986,969 pertains to a mixture for the storage of heat energy utilizing a heat of fusion material including sodium sulfate decahydrate, borax as a nucleating agerit, and hydrous magnesium aluminum silicate (attapulgus clay) as a homogenizing agent. This composition maintains the salt-hydrate in suspension during repeated heating and cooling cycles. Further, a method for preparing the mixture is disclosed.

### Summary

It is an object to provide improved materials for thermochemical storage.

A composite material according to claim 1 and a method for forming a composite material according to claim 8 are disclosed. Further embodiments are subject matter of dependent claims.

In one aspect, a composite material for thermochemical storage is provided. The composite material comprises a porous substrate material and a salt hydrate, wherein the salt hydrate is arranged directly on the substrate material.

In another aspect, a method for forming a composite material for thermochemical storage is disclosed. The method comprises steps of providing a porous substrate material, and arranging a salt hydrate directly on the substrate material.

In the sense of the application, the term "arranged directly" on the substrate material means that there is no chemical activation or chemical pre-treatment of the substrate material before applying the salt hydrate, e.g. by impregnation with silica-gel (or other materials) known from the prior art. All process steps for forming the composite material are physical processes. The composite material may be made of the substrate material and the salt hydrate, excluding other materials. In particular, the substrate material may be free of silica-gel.

The substrate material may be a mesoporous material. Pore sizes in the range of 2 nm to 50 nm are called mesopores.

The substrate material may be provided as particles, wherein the particles have a diameter between 2.5 mm and 4.0 mm.

The substrate material is attapulgite. Attapulgite (also called palygorskite) is a magnesium aluminum phyllosilicate with formula (Mg,Al)₂Si₄O₁₀(OH)·4(H₂O). The attapulgite may be thermally activated before the salt hydrate is added in order to remove water molecules from pores of the material. For example, the attapulgite may be calcinated, e.g. by temperatures of 400 °C, 550 °C, or 700 °C. In one embodiment, the substrate material may be pure attapulgite which is free of a porosity intensifying additive. In another embodiment, the attapulgite may be modified by adding an additive, e.g. wax, maize, and / or diatomite, which may intensify porosity of the attapulgite. The modification may be performed in addition to the calcination. The particle size of the attapulgite may be in the range of 2.0 mm to 3.0 mm. The salt hydrate may be selected from the following group: CaCl₂·6H₂O, MgCl₂·6H₂O, MgSO₄·7H₂O, Na₂SO₄·10H₂O, Na₂CO₃·10H₂O, Na₃PO₄·12H₂O, LiCl·5H₂O, and ZnSO₄·7H₂O.

The features disclosed in context with the composite material can be applied to the method for forming the composite material and vice versa.

### Description of embodiments

Following, exemplary embodiments are disclosed.
- Fig. 1: shows a composite preparation procedure.
- Fig. 2: shows adsorption capacities of composites based on a pure Att substrate calcined at different temperatures.
- Fig. 3: shows the influence of specific area and average pore diameter on the adsorption capacity of Att550-based composites.
- Fig. 4: shows the dynamic performance of Att550-based composites.
- Fig. 5: shows the adsorption behavior of modified Att550-based composites.
- Fig. 6: shows the dynamic performance of modified Att550-based composites.
- Fig. 7: shows composites of Att550 and various salt hydrates.
- Fig. 8: shows the pattern of CaCl₂ distribution across the granule.
- Fig. 9: shows long-term hydrothermal stability of Att550-CaCl₂ and Att550-LiCl composite.

In the studies reported here a wide range of composite materials of different combinations have been developed and investigated to enable storage of thermal energy at relatively low temperature levels between 90 °C and 110 °C. The composites investigated here are consisted of hygroscopic active component, typically a mono or multi salt hydrates, embedded on a supporting porous matrix. Decisive factor for the efficiency of such a composite is the interplay of the involved substrate materials, active components and additives. In general, the substrate material provides the required surface area and pore system, where the active component can be finely dispersed. In this study two groups of mesoporous materials have been employed as substrate to incorporate the salt hydrates. While the first group is consisted of both pure and in various form modified attapulgite, the second group comprises different kinds of activated carbons. The second group pertaining to activated carbons is not part of the invention.

Though a large number of hydrate-forming salts are available, none of this is in a sole form suitable for adsorptive thermochemical storage application. It is because the equilibrium conditions that define the dynamic process, particularly temperature and humidity, usually lie beyond the range of the deliquescence coefficient of the respective salt.

Thus the composites adsorbent studied here will have a potential scope in taking advantages of the complementary effect of salt hydrates and the porous substrate materials.

Numerous research activities have been performed on developing and investigating composites of different material pairs. These are considered and evaluated mainly from three different views i.e., application areas, involved materials and investigation methods. So far published studies have shown that composites have an extraordinary potential for application in many areas such as cooling, dehumidification, energy transformation and storage.

However, most of these investigated composites are preferably based on CaCl₂ and hydrophilic materials such as silica gels of different pore sizes, zeolites and activated alumina. Due to the hydrophilic nature of the above mentioned substrate materials; it is not possible to certainly determine in advance the ratio of the water uptake by the salt hydrate relative to the one by the carrier material participated in the composite. As a result, it can be challenging to assess the temperature level that is necessary for the dehydration of the storage material.

A large number of investigations have been also accomplished generally based on thermo-analytical methods and structure analysis that enable to assess initial material characteristics. However, minor emphasis has been placed on the material cyclic stability from the thermal energy storage aspect. So far only one study has been identified reporting on a cyclic stability of composites for application in thermally driven adsorption heat pump and chiller.

Thus, in the present application besides the investigations on the adsorption behavior of the composite, short and long term hydrothermal cyclic tests have been also performed. Moreover, so far there are few studies reported on investigation of composites in an open system, but without focus on the corrosion aspect. Whereas in the studies reported here the composites will be applied in a closed storage system where it is possible to maintain the hydration and dehydration equilibrium conditions using vacuum controlled process parameters. This enables to prevent one of the well-known drawbacks of salt hydrates i.e. their corrosive behavior.

Several hygroscopic salt hydrates were selected, as shown in Table 1, as active substances for preparation of a wide range of composites. The bases of the selection criterion were mainly water adsorption capacity, hydration enthalpy and easily availability. All the salt hydrates (Carl Roth GmbH) used here were of lab grade and have been used without further purification.

**Table 1 - Thermophysical properties of the salt hydrates**

| Salt hydrate | M_{Salt} | M_{Hydrate} | n·M_{H2O} | H₂O content | Energy density | DRH at 20°C |
|---|---|---|---|---|---|---|
| | [g/mol] | [g/mol] | [g/mol] | [g/g] | [kWh/kg] | [%] |
| CaCl₂·6H₂O | 111 | 219 | 108 | 0.973 | 0.458 | 33.3 |
| MgCl₂·6H₂O | 95 | 203 | 108 | 1.137 | 0.556 | 33.1 |
| MgSO₄·7H₂O | 120 | 246 | 126 | 1.050 | 0.464 | 91.3 |
| Na₂SO₄·10H₂O | 142 | 322 | 180 | 1.268 | 0.486 | 95.6 |
| Na₂CO₃·10H₂O | 106 | 286 | 180 | 1.698 | n.a. | 97.9 |
| Na₃PO₄·12H₂O | 164 | 380 | 216 | 1.317 | n.a. | 99.6 |
| LiCl·5H₂O | 42 | 132 | 90 | 2.143 | n.a. | 12.4 |
| ZnSO₄·7H₂O | 161 | 287 | 126 | 0.783 | n.a. | 89.0 |

| | | | | | | |
|---|---|---|---|---|---|---|
| (DRH - Deliquescence Relative Humidity) | | | | | | |

As suitable substrate materials numerous porous hydrophobic materials of various compositions, structure, particle form and size have been employed. All those identified substrate materials exhibit a broad distribution of pores predominantly in the mesoporous range and are hydrophobic by nature.

For practical purpose those materials were generally classified into two major groups as it has been presented in Table 2. The first group of substrate material, which is not part of the invention, is activated carbon (AC). About eight kinds of activated carbons have been identified. The activated carbons besides the self-developed Poolkohl are commercially available materials. The second group of porous material, which is part of the invention, is known as attapulgite. This group of material exhibit free channels of diameter in the range 0.37 to 0.63 nm, enabling incorporation of both water and salt hydrate, thus considered as a potential candidate for making composites. More than ten kinds of attapulgite substrates have been developed mainly through varying the calcination temperature (400 °C, 550 °C and 700 °C) and modification by using three different porosity intensifying additives i.e. wax (W), maize (M) and diatomite (KG).

**Table 2 - Characteristic properties of the substrate materials**

| Substrate material (short description) | Bead size/Pellet Ø | Density ρ | BET surface area | Particle form |
|---|---|---|---|---|
| | [mm] | [g/l] | [m²/g] | |
| Activated Carbon (AC) - not part of the invention | | | | |
| Poolkohl (PK) | 2.5 - 4.0 | 480 | 1250 | pellet |
| AFA3-1150W (AFA3) | 2.0 - 3.0 | 450 | 1050 | pellet |
| ADA30/60 (ADA) | 0.15 - 2.0 | 430 | 1200 | fracture |
| AFA1400 (AFA4) | 2.0 - 3.15 | 450 | 1450 | pellet |
| D47/4 (D47) | 2.0 - 4.0 | 470 | 1050 | pellet |
| DGK | 1.0 - 2.0 | 550 | 1100 | granulate |
| AFA3-1150W (AFA3) | 2.0 - 3.0 | 450 | 1050 | pellet |
| ADA30/60 (ADA) | 0.15 - 2.0 | 430 | 1200 | fracture |

| Attapulgite calcined at 400 °C, 550 °C and 700 °C temperatures | | | | |
|---|---|---|---|---|
| Att-400 | 2.0 - 3.0 | 620 | 121.80 | fracture |
| Att-550 | 2.0 - 3.0 | 600 | 115.85 | fracture |
| Att-700 | 2.0 - 3.0 | 580 | 109.47 | fracture |

| Attapulgite with porosifying additives | | | | |
|---|---|---|---|---|
| 20%W | 2.0 - 3.0 | 765 | 131.3 | fracture |
| 30%M | 2.0 - 3.0 | 775 | 118.2 | fracture |
| 50%KG | 2.0 - 3.0 | 960 | 75.7 | fracture |

The composites investigated in this application were made by a direct incorporation of the substrate material with salt hydrate solution of a pre-defined concentration. The following part describes the procedures for preparation of the composites.

Approximately 30 - 200 g of the selected substrate has been thermally activated to make the pores free of water molecules. The temperature and the activation time vary from 120 °C to 150 °C and 2 - 6 hours, respectively depending on the nature and the volume of the substrate used. Thermal relaxation of the activated material has been induced using anhydrous hygroscopic material in order to avoid renewed water uptake. The final weight of the activated substrate and the final water content has been determined.

After the cooling process, a homogenous salt hydrate solution of 1 - 3 ml has been added drop-wise on the substrate material, followed by continuous stirring with 150 rpm for 48 - 72 hours at a temperature of 25 - 30 °C and atmospheric pressure. The amount of the solution added was set mostly based on the pore volume of the substrate material and the consistency of the mixture.

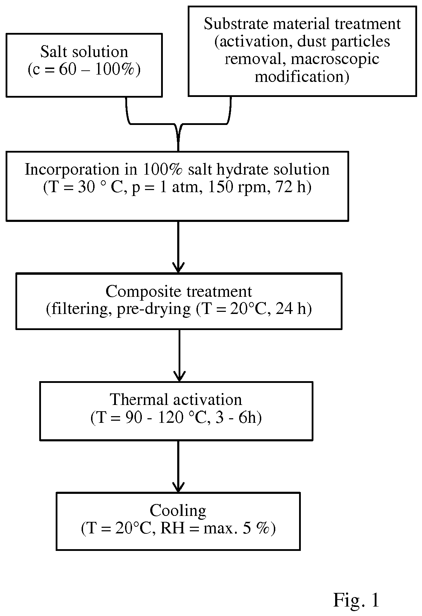

Finally, the wet composite was filtered and purified using a small amount of water, in order to remove the rest salt coated on the surface of the substrate material followed by its thermal activation. A summary of the composite preparation method is depicted schematically in Fig. 1.

So far, a wide range of composites has been prepared in a lab scale. In the following section, the different approaches taken on the physico-chemical characterizations and surface analysis of those composites are described. Those parameters that are considered here to identify an optimum composite were: adsorption capacity, energy density, and salt deposition on the surface of the substrate. Moreover, one of the main issues addressed in this application is the dynamic performance of the composite associated with the mass and heat transfer as well as the pressure drop across the bulk material.

Theoretically, many of the prepared composites are expected to be suitable as a storage material. It is therefore advantageous to make a pre-selection with experimental methods that can provide the results within a short time range. Thus, in these studies a static and dynamic adsorption method has been applied for material screening through determination of their adsorption properties under pre-defined equilibrium conditions. Moreover, the reversibility of water uptake/release under hydrothermal conditions has been considered as a pre-requisite factor for those selected composites to be regarded as a potential thermochemical material for a technical scale application. Thus, several tests were conducted on the finally selected composites to determine the changes occurred on the adsorbed/ released amount of water and to determine the establishment of the hydrate levels after multiple operation cycles. Evaluation on a visual appearance of excess salt on the surface of the composite has been done as a qualitative indicator of cyclic stability of the investigated material.

Several tests were conducted on the pre-selected composites to determine the changes encountered on the specific surface area and pore volume resulted from incorporating the porous substrates with salt hydrates. The measurement of specific surface area was done using ASAP2020 (Micromeritics GmbH) with nitrogen gas. Samples were heated to 300 °C prior to the measurement in order to remove water from the particle surface and pores. The porosity and bulk density values were determined by mercury porosimetry using Auto Pore IV (Micromeritics GmbH).

### Results - Attapulgite based composites

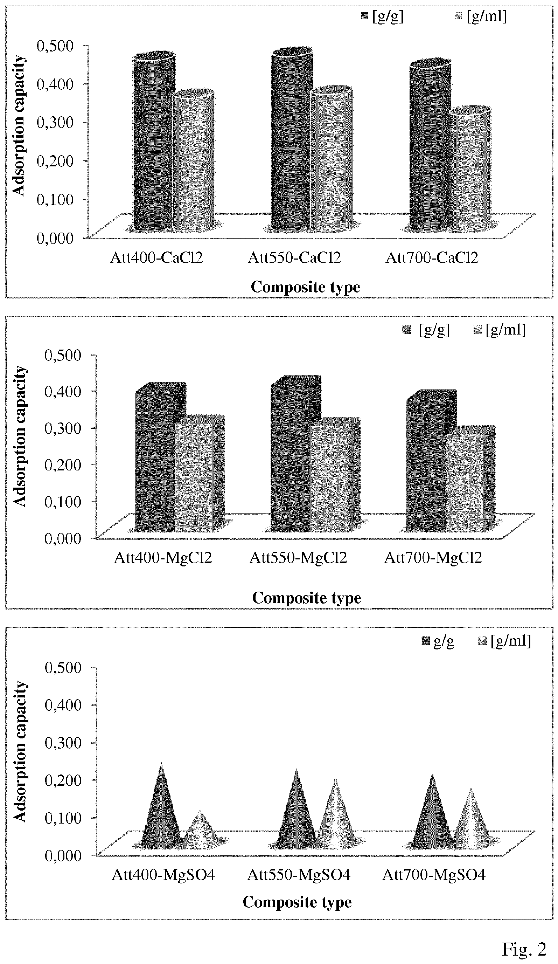

For practical purpose, the Att-based composites are characterized in three phases. Primarily those composite made based on pure Att substrates prepared at three different calcination temperatures (400°C, 550°C and 700°C) and three mainly known salt hydrates (CaCl₂, MgCl₂ and MgSO₄) have been characterized. The results attained from a static adsorption at 19.7 mbar partial pressure are illustrated in Fig. 2. From these results, it is clear that the statically determined gravimetric and volumetric adsorption capacities of those three composites showed, with Δaₘₐₓ = 0.031 g/g, no significant differences in terms of substrate calcination temperatures.

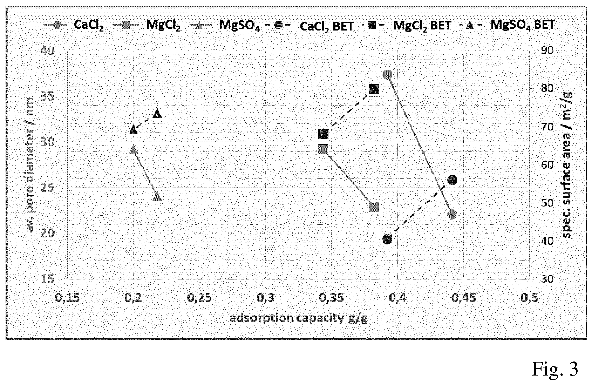

However, comparing the investigated composites with respect to the involved salt hydrate, those with MgSO₄ with 0.218 g/g reveal by far the least overall adsorption capacity, while those with CaCl₂ with 0.452 g/g showed the highest value. This is in part due to the differences in the relative deliquescence of the three salt hydrates. The variation of adsorption capacities of these composites could also be related to the mean pore radius and specific surface area of the involved substrates, as it is shown in Fig. 3. Higher specific surface area and lower average pore diameter of the substrate material favored the adsorption behavior of the corresponding composite. Furthermore, possibly other factors, which are not yet been elucidated in detail, may also play a role.

On the other hand in order to identify the influence of variation of the Att-substrate calcination temperature on the adsorption behavior of the respective composite, detailed characterizations in terms of its hydrothermal material performance have been executed. As it has been already mentioned, the substrate materials explored are hydrophobic by nature so that the thermodynamic properties of the composites are mainly influenced by the involved salt hydrate. The interaction of water and salt hydrate in such a system is a mono-variant type, by which the water uptake is accompanied with formation of a fixed number of hydrates under defined equilibrium conditions. However, the water uptake of salt hydrates can extend beyond their deliquescence limits. Thus, the hydration process occurs mainly in two partial processes, i.e. adsorption (DRH ≥ RH, RH - relative humidity) followed by partial absorption (DRH < RH). Whereas saturation without reaching a solution state is a typical behavior observed only in a composite but not in a pure salt hydrate.

Thus, generally the interpretation of those results attained from hydrothermal cyclic stability investigations performed on a specific composite have been achieved on the bases of the range of the adsorption capacity reached within the limit of a defined process time in which mainly adsorption occurs.

In addition to the above-mentioned approach on the analysis of the results, basic calculations were performed. These include determinations of the average water uptake (+Δ*g̅*) and release (-Δ*g̅*) as well as average adsorption capacity (*a̅*). The corresponding experimentally attained and calculated values for the three composites are summarized in Table 3.

**Table 3 - Average absorbed (+Δg̅) and desorbed (-Δg̅) water amount of the CaCl₂ based composites**

| Composite | 1 - 10 cycles | | | 40 cycles | | | 80 cycles | | | *a̅* ₍ₗₒₛₛ₎ [g/g] |
|---|---|---|---|---|---|---|---|---|---|---|
| | -Δ*g̅* [g] | +Δ*g̅* [g] | (*a̅*) [g/g] | -Δ*g̅* [g] | +Δ*g̅* [g] | (*a̅*) [g/g] | -Δ*g̅* [g] | +Δ*g̅* [g] | (*a̅*) [g/g] | |
| Att400 (m = 4.144 g) | 1.824 | 1.830 | 0.441 | 1.214 | 1.222 | 0.294 | 0.863 | 0.911 | 0.214 | 0.227 |
| Att550 (m = 4.221 g) | 1.926 | 1.983 | 0.463 | 1.844 | 1.904 | 0.444 | 1.694 | 1.776 | 0.411 | 0.052 |
| Att700 (m = 3.860 g) | 1.598 | 1.660 | 0.422 | 1.593 | 1.641 | 0.419 | 1.484 | 1.550 | 0.393 | 0.029 |

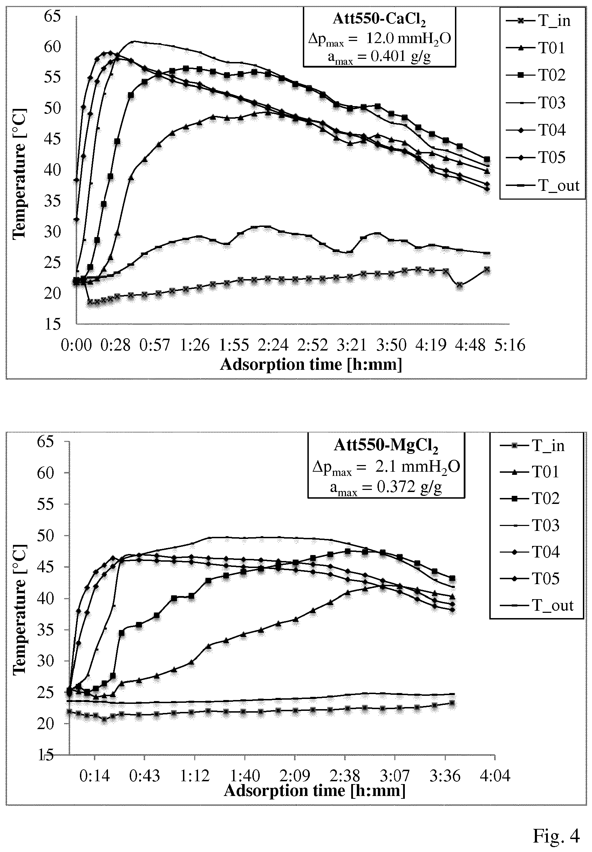

Comparing the cyclic stabilities of the three composites, in terms of the adsorbed and released amount of water, no significant changes have been recognized within the first 10 cycles. However, in the following 80 cycles substantial changes were observed. Yet Att400-CaCl₂ composite has exhibited the most comprehensive changes, in that its average adsorption capacity (*a̅*) has been reduced by 0.147 g/g and 0.227 g/g resulting in approx. 30 % and 50 % losses after 40 and 80 cycles, respectively in comparison to the initial value. Whereas, the specific water uptake efficiency of Att550-CaCl₂ and Att700-CaCl₂ composites obtained after 80 cycles are 0.411 g/g and 0.393 g/g leading to 11 % and 7 % losses, respectively. These values are much lower than those determined for Att400-based composites. Thus, due to its higher hydrothermal stability and its comparatively low calcination temperature, Att-550 has been selected as an optimum substrate for further use. The dynamic performance of the Att-550 based composite, in terms of both its temperature courses and the maximum increase in a pressure drop during the process, is depicted in Fig. 4. For practical purpose both inlet/outlet temperatures (Tᵢₙ/Tₒᵤₜ) as well as those temperature points within the bulk material (T01 - T05) are also shown in Fig. 4.

The maximum dynamic adsorption capacity and the temperature attained from Att550-CaCl₂ composite are 0.401g/g and 60.7 °C respectively. This is consistent with the result attained (0.420 g/g) from investigations done under similar conditions. The thereby determined specific energy density reached around 0.285 kWh/kg.

So far there are no other comparable dynamic studies done on attapulgite based composites. From calorimetric studies done on attapulgite based CaCl₂ composite by result of 0.395 g/g and 0.417 kWh/kg at a sorption temperature of 20 °C has been attained. Other studies carried out on a dynamic performance of a composite based on attapulgite related substrate known as vermiculite and CaCl₂ was in the range between 0.06 - 0.18 g/g depending on the ratio of the salt hydrate to the substrate. This result is significantly lower than those obtained in this application.

While CaCl₂ containing composite shows comparable behavior in terms of its static and dynamic performances, on MgCl₂ based composite slight deviations were observed.

Following, characterizations of those composites prepared on the basis of a modified Att-550 substrate have been carried out. As has been stated above, the modification of Att550 substrate has been achieved through including three types of porosing additives in various ratios in order to attain different porosity level. Generally, an improvement in the porosity level has been achieved by more than 6 - 20 % in comparison to the corresponding unmodified substrate. The results are summarized in Table 4.

**Table 4 - Change in porosity of modified and pure Att550**

| Substrate | Porosity ε [%] | BET [m²/g] |
|---|---|---|
| Att550 | 53.3 | 117 |
| 20%W | 62.7 | 131.3 |
| 30%M | 66.3 | 118.15 |
| 50%KG | 56.8 | 75.73 |

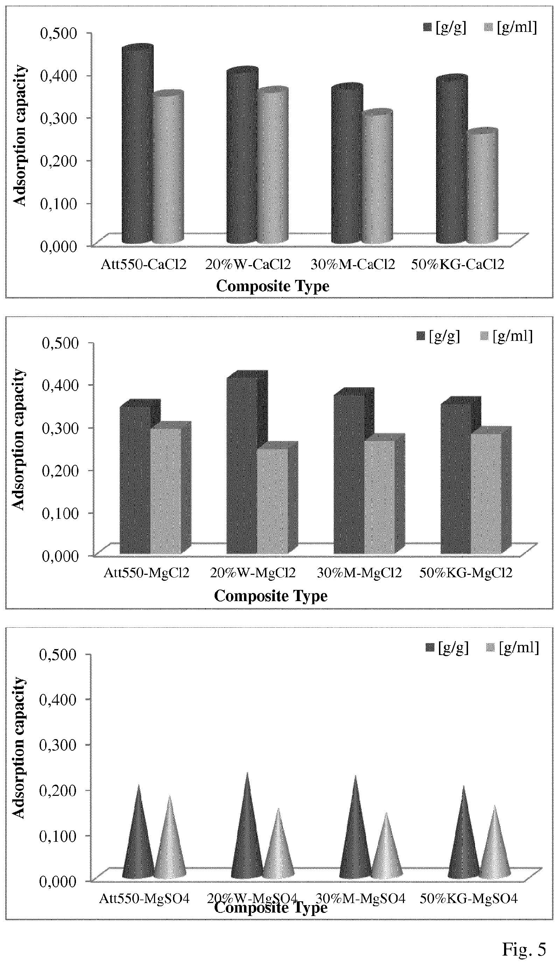

To assess the influence of substrate modification on the adsorption performance of the respective composite, both static and dynamic experiments have been performed. In Fig. 5 representative results obtained from static adsorption measurements are illustrated. Those results show that composites consisting modified Att550, for the same salt hydrate, differ only slightly from those made from the pure Att550 substrate.

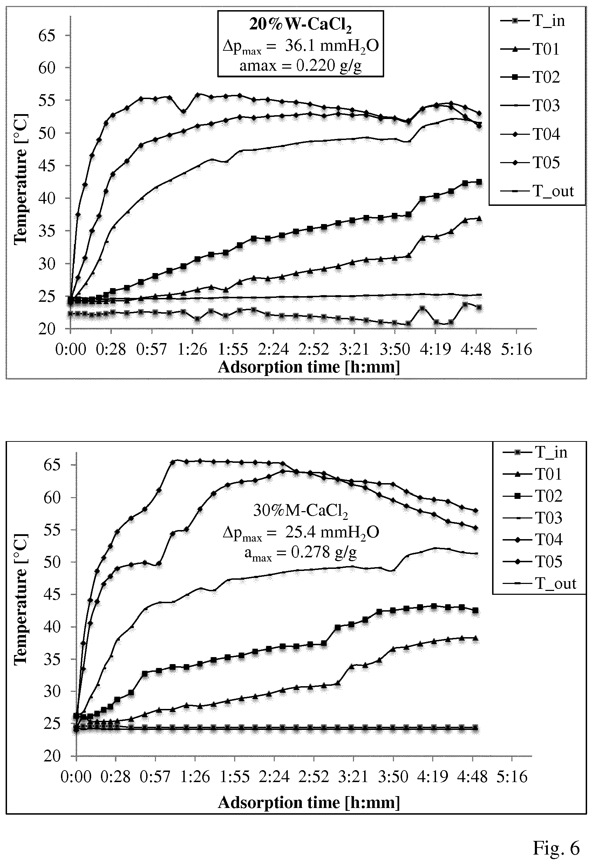

However, from the dynamic performance tests (Fig. 6) at a dehydration temperature of 110 °C it has been observed that composites generated based on modified substrates were unstable. For instance, concerning the dynamic performances of two composites comprising CaCl₂ and in different ratio modified substrates only 30 % - 50 % of the total bulk material was loaded with water. This unfavorable mass transfer within the bulk material is mainly due to the increase in the pressure drop (Δp), which is approximately 3 - 12 times higher in comparison to the pure Att550 based composite (Fig. 4). Moreover, after 5 dynamic cycles the adsorption capacities of the investigated composites has declined substantially and a physical degradation including volume expansion of the bulk material within the adsorber has been also observed.

As it has been already mentioned, due to the generally lower hydrothermal stability and inefficient dynamic performance of the Att550 composites made by using porosity enhancing additives, further studies have been pursued only with those composites comprising pure Att550 substrate.

Besides variation of the substrate material, attempts have been also made to compare composites based on the kind of active component used. Thus beyond the three already mentioned salt hydrates, others have been employed in the studies.

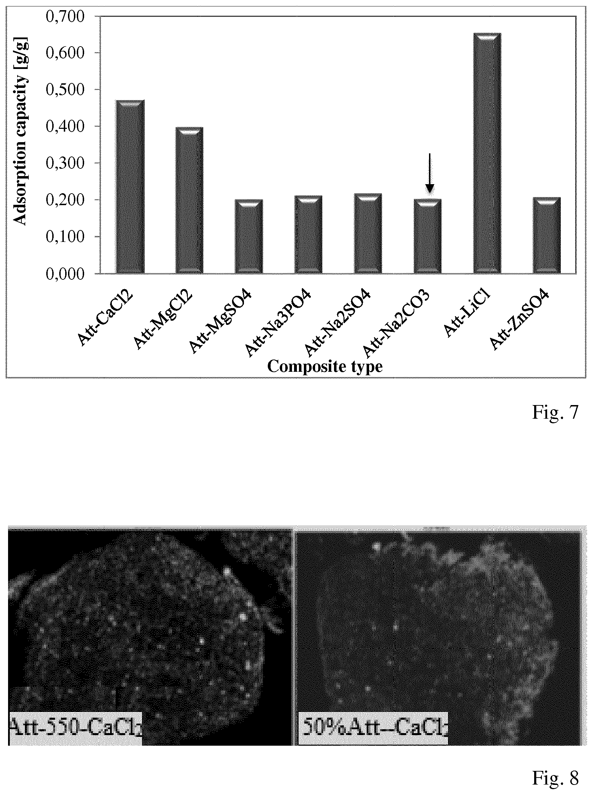

In the so far prepared composites the degree of salt content varied from 16 to 32 wt% depending on the type of the salt hydrate used. While those CaCl₂, MgCl₂ and LiCI based composites exhibit a higher salt content up to 32 wt%, those composites containing Na₂SO₄, Na₂CO₃, Na₃PO₄ and ZnSO₄ show only up to 17 wt%. The effect of variation of salt hydrate on the adsorption behavior of the Att550 based composites, including level of hydration, is illustrated in Fig. 7. While the equilibrium adsorption capacities of composites involving CaCl₂ (0.474 g/g) and MgCl₂ (0.401 g/g) only slightly differ from each other, composite based on the LiCI (0.657 g/g) exceeds highly the two aforementioned composites. The equilibrium adsorption capacity of attapulgite based LiCI composite, with 30 % salt content, attained under partial pressure of 15 mbar was reported to be 0.44 g/g. In the studies reported here partial pressure of 19.2 mbar has been applied. This probably contributes to the higher adsorption capacity in this application compared to literature results.

The adsorption-desorption kinetics and the associated water uptake/release ratio of CaCl₂ and LiCI based composites are with 80 % - 82 % at a dehydration temperature below 100 °C comparable to each other. However increasing the temperature to 110 °C resulted a hydrothermal degradation of the LiCI based composite. Thus, for a possible application of this particular composite, it is intended to use lower charging temperature up to 90 °C.

In addition, in all the so far developed composites, a uniform distribution of the salt hydrate across the substrate granulate have been observed. Representative results obtained from elemental distribution maps of Ca in different regions of pure and modified Att-based composites are presented in Fig 8.

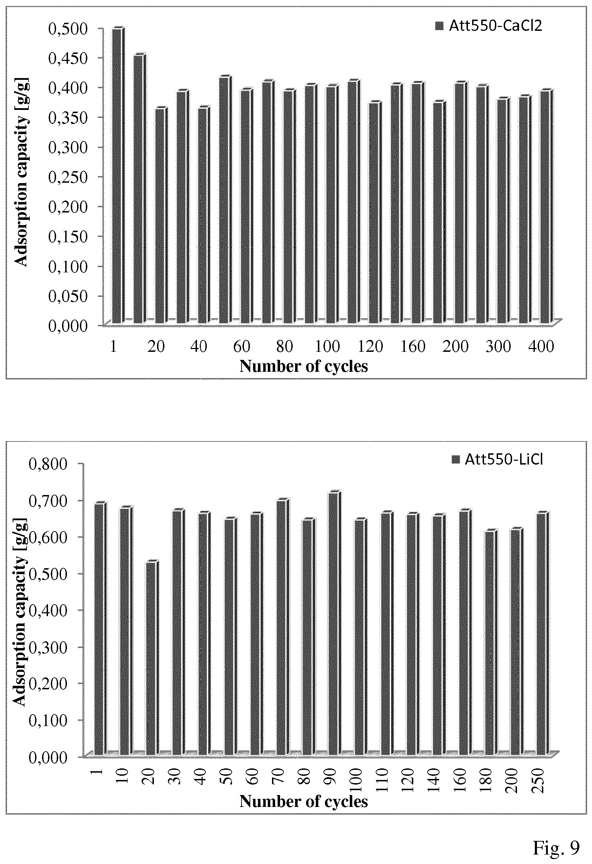

The final characterization of Att550 based composites focused on the long-term hydrothermal stability. For that cyclic tests in the range between 250 and 400 cycles have been conducted on the two finally selected composites i.e. Att550-CaCl₂ and Att550-LiCl. Results obtained from these investigations are summarized on Fig. 9. Those results show that on CaCl₂ composite about 0.045 g/g decrease in the specific adsorption capacity have been observed after the first 10 cycles, that is about 9 % loses in comparison to the initial value. Through the following 400 cycles there has been some fluctuations in the adsorption capacities but it has stayed at a properly stable level around 0.40 g/g. This differs from the LiCI based composite result, which showed that almost constant hydrothermal properties after 250 cycles. The decrease in specific adsorption capacity was less than 2% that is within the acceptable value.

Moreover, concerning the dynamic performance of Att550-CaCl₂ determined after 400 cycles the maximum temperature has shifted slightly from 60.7 °C to 59.5 °C (Fig. 4) and its water release at a dehydration temperature of 110 °C was about 87 %. This is comparable to the result obtained from the dynamic tests done during the first 10 cycles.

The experimental results achieved so far have revealed that under pre-defined process conditions using low temperature in the range between 90 - 110 °C a dehydration of the finally selected composites up to 87 %, in comparison to the initial water uptake efficiency, was possible.

The features disclosed in the specification, the claims and the figures can be relevant for the implementation of embodiments either alone or in any combination with each other.

## Claims

1. A composite material for thermochemical storage comprising a porous substrate material and a salt hydrate, wherein the substrate material is attapulgite and the salt hydrate is arranged directly on the substrate material.

2. The composite material of claim 1, wherein the substrate material is free of a pre-treatment which is based on a chemical process.

3. The composite material of claim 1 or 2, wherein the substrate material is free of silica gel.

4. The composite material of any one of the preceding claims, wherein the substrate material is a mesoporous material.

5. The composite material of any one of the preceding claims, wherein the substrate material is provided as particles, wherein the particles have a diameter between 2.5 mm and 4.0 mm.

6. The composite material of claim 1, wherein the substrate material is pure attapulgite which is free of a porosity intensifying additive.

7. The composite material of any one of the preceding claims, wherein the salt hydrate is selected from the following group: CaCl₂-6H₂O, MgCl₂·6H₂O, MgSO₄·7H₂O, Na₂SO₄·10H₂O, Na₂CO₃·10H₂O, Na₃PO₄·12H₂O, LiCl·5H₂O, and ZnSO₄·7H₂O.

8. A method for forming a composite material for thermochemical storage, the method comprising steps of:
- providing a porous substrate material, the substrate material being attapulgite, and
- arranging a salt hydrate directly on the substrate material.

## Patentansprüche

1. Verbundstoffmaterial zur thermochemischen Speicherung, umfassend ein poröses Substratmaterial und ein Salzhydrat, wobei das Substratmaterial Attapulgit ist und das Salzhydrat direkt auf dem Substratmaterial angeordnet ist.

2. Verbundstoffmaterial nach Anspruch 1, wobei das Substratmaterial frei von einer Vorbehandlung ist, die auf einem chemischen Prozess basiert.

3. Verbundstoffmaterial nach Anspruch 1 oder 2, wobei das Substratmaterial frei von Kieselgel ist.

4. Verbundstoffmaterial nach einem der vorhergehenden Ansprüche, wobei das Substratmaterial ein mesoporöses Material ist.

5. Verbundstoffmaterial nach einem der vorhergehenden Ansprüche, wobei das Substratmaterial als Partikel vorliegt, wobei die Partikel einen Durchmesser zwischen 2,5 mm und 4,0 mm aufweisen.

6. Verbundstoffmaterial nach Anspruch 1, wobei das Substratmaterial reines Attapulgit ist, das frei von einem die Porosität intensivierenden Additiv ist.

7. Verbundstoffmaterial nach einem der vorhergehenden Ansprüche, wobei das Salzhydrat aus der folgenden Gruppe ausgewählt ist: CaCl₂·6H₂O, MgCl₂·6H₂O, MgSO₄·7H₂O, Na₂SO₄·10H₂O, Na₂CO₃·10H₂O, Na₃PO₄·12H₂O, LiCl·5H₂O und ZnSO₄·7H₂O.

8. Verfahren zur Herstellung eines Verbundstoffmaterials zur thermochemischen Speicherung, wobei das Verfahren die folgenden Schritte umfasst:
- Bereitstellen eines porösen Substratmaterials, wobei das Substratmaterial Attapulgit ist, und
- Anordnen eines Salzhydrats direkt auf dem Substratmaterial.

## Revendications

1. Matériau composite destiné à un stockage thermochimique comprenant un matériau de substrat poreux et un hydrate de sel, dans lequel le matériau de substrat est l'attapulgite et l'hydrate de sel est agencé directement sur le substrat.

2. Matériau composite selon la revendication 1, dans lequel le matériau de substrat est exempt d'un prétraitement qui est basé sur un procédé chimique.

3. Matériau composite selon la revendication 1 ou la revendication 2, dans lequel le matériau de substrat est exempt de gel de silice.

4. Matériau composite selon l'une quelconque des revendications précédentes, dans lequel le matériau de substrat est un matériau mésoporeux.

5. Matériau composite selon l'une quelconque des revendications précédentes, dans lequel le matériau de substrat est fourni sous forme de particules, dans lequel les particules ont un diamètre compris entre 2,5 mm et 4,0 mm.

6. Matériau composite selon la revendication 1, dans lequel le matériau de substrat et l'attapulgite pure qui est exempte d'additif intensifiant la porosité.

7. Matériau composite selon l'une quelconque des revendications précédentes, dans lequel l'hydrate de sel est choisi dans le groupe suivant : CaCl₂·6H₂O, MgCl₂6H₂O, MgSO4·7H₂O, Na₂SO₄·10H₂O, Na₂CO₃·10H₂O, Na₃PO₄·12H₂O, LiCl·5H₂O, et ZnSO₄·7H₂O.

8. Procédé de formation d'un matériau composite destiné à un stockage thermochimique, le procédé comprenant les étapes consistant à :
- fournir un matériau de substrat poreux, le matériau de substrat étant l'attapulgite, et
- agencer un hydrate de sel directement sur le matériau de substrat.
